# EUROPEAN PATENT APPLICATION

(11) **EP 1 959 657 A1**
(43) Date of publication of application: **20.08.2008**
(21) Application number: 07122007.3
(22) Date of filing: 30.11.2007
(51) Int. Cl.: H04M 3/42, H04Q 3/00

(54) **Method, system, application server and switching device for processing call**

(30) Priority: 14.02.2007 CN 200710073317
(71) Applicant: Huawei Technologies Co., Ltd., Longgang District, Shenzhen Guangdong 518129 (CN)
(72) Inventor: Miao, Caixia, Shenzhen, 518129, GUANGDONG Province (CN)
(74) Representative: Collin, Jérôme

(57) **Abstract**

The present invention provides a method for processing a call to ensure that the call is selected to be deassigned or released when a value-added service can not be provided according to current application resources state. The method includes: receiving, by an AS, a value-added service call triggered by a switching device (3), determining whether the call can be deassigned according to a preconfigured service policy when the AS finds the value-added service can not be provided according to a current resource state (4); sending a notification for deassigning the call to the switching device when a determining result is that the call can be deassigned (4.1); and processing, by the switching device, the value-added service call as a call not triggering the value-added service (5,6,7). The present invention further provides a system, an AS and a switching device for processing a call.

## Description

### Field of the Invention

The present invention relates to the communication field, and more particularly to a method, a system, an application server and a switching device for processing a call.

### Background of the Invention

A network based on Internet Protocol (IP) may provide Multimedia Integrated Services involving voice, data and video. With a Next Generation Network (NGN) as an example, the core of the NGN lies in the soft switching and the NGN adopts an open and standard architecture to provide various services. Generally, a service except for a basic network service such as a telephone and a telegraph, is called a value-added service, such as a short message service, a multimedia message service and a coloring ring back tone service. Since the value-added service has been widely used and the demand for the value-added service continuously increases, the quality of supporting devices which provide the value-added service becomes an important issue influencing the degree of satisfaction towards the value-added service. An Application Server (AS) is one of the devices for providing the value-added service. In the prior art, when the resources are insufficient or the resources are unavailable during the AS operation, a conventional process includes completely discarding a call or discarding the call in proportion. However, some value-added services are unnecessary for a normal call, for example, the coloring ring back tone, i.e. a personalized ring back tone. When a calling party calls a user who has subscribed for the coloring ring back tone service, a conventional ring back tone of "Do ... Do ... will not be presented to the calling party and the calling party may hear a piece of music configured by the user. In this way, the coloring ring back tone enriches communications. However, the call should be connected normally if the coloring ring back tone can not be provided. In the prior art, the processing of completely discarding a call or discarding the call in proportion may protect the AS from being affected in an abnormal condition, but the processing still causes inconvenience for the user because the call is not connected. As for the operator, the processing in the prior art results in a lowered call success rate and a degraded quality of the service. Moreover, if the call is not connected, the user may choose to call continuously. The recalls cause a great load for the communication system, and the vicious circle is disadvantageous for a rapid recovery of the system.

### Summary of the Invention

One embodiment of the present invention provides a solution for processing a call, wherein when the value-added service can not be provided according to application resources, the value-added service call is not discarded and is processed as a normal call not triggering the value-added service, and therefore, the call success rate is improved.

A method for processing a call according to one embodiment of the present invention, including:

receiving, by an application server, a value-added service call triggered by a switching device;

determining whether the call can be deassigned according to a preconfigured service policy when the application server finds that the value-added service can not be provided according to a current resource state;

when a determining result is that the call can be deassigned,

instructing the switching device to process the value-added service call as a call not triggering the value-added service.

A system for processing a call according to another embodiment of the present invention, including:

an application server, adapted to receive a value-added service call triggered by a switching device, determine whether the call can be deassigned according to a preconfigured service policy when the application server finds that the value-added service can not be provided according to a current resource state, and send a notification for deassgning the call to the switching device when the application server determines that the call can be deassigned; and

the switching device, adapted to process the value-added service call as a call not triggering the value-added service after receiving the notification for deassgning the call from the application server.

An application server according to another embodiment of the present invention, including:

a receiving module, adapted to receive a value-added service call triggered by a switching device;

a resource monitoring module, adapted to monitor and record a resources state and determine whether the value-added service can be provided according to a current resource state and the call received by the receiving module;

a judging module, adapted to invoke a preconfigured service policy to determine whether the call can be deassigned when the resource monitoring module determines that the value-added service can not be provided according to the current resource state; and

a notifying module, adapted to send a notification for deassigning the call to the switching device when the judging module determines that the call can be deassigned.

A switching device according to another embodiment of the present invention, including:

a receiving unit, adapted to receive a service call;

a determining unit, adapted to determine whether the service call received by the receiving unit is a value-added service call;

a triggering unit, adapted to trigger the value-added service call determined by the determining unit to an application server; and

a call processing unit, adapted to process the value-added service call as a call not triggering the value-added service.

As stated above, embodiments of the present invention solve a problem that a call can not be connected when a value-added service can not be provided according to application resources state. According to embodiments of the present invention, whether to deassign the value-added service call is determined according to a preconfigured service policy. Therefore, problems in the prior art may be solved and satisfaction of a user may be improved when the value-added service is used to enrich people life. The situation, where the call is discarded by the communication system because some value-added services can not be provided according to the application resources state, is avoided. Without the recalls, the call success rate may be improved and the load of the communication system may be reduced, which is advantageous for a rapid recovery of the communication system.

### Brief Description of the Drawings

The above and other objects, features and other advantages of the present invention will be more clearly understood from the following detailed description taken in conjunction with the accompanying drawings, in which:

Figure 1 shows an NGN networking architecture in the prior art ;

Figure 2 shows a signaling in a call processing according to an embodiment of the present invention;

Figure 3 shows an apparatus in a call processing according to an embodiment of the present invention;

Figure 4 shows a system in a call processing according to an embodiment of the present invention; and

Figure 5 shows a structure of a switching device according to an embodiment of the present invention.

### Detailed Description of the Embodiments

Some value-added services are unnecessary for a normal call. The call may be processed normally without value-added services, such as the coloring ring back tone. As for a user, it is expected that the call of the user may be processed normally to meet a basic communication requirement when the value-added service is unavailable or the resources are insufficient.

An application server (AS) may deassign some calls when the resources are abnormal according to different service features and the use pattern of users. The deassign operation refers to the situation that the system uses a simplified or a substitute process other than a triggered service to process and connect the call in specific cases. For example, the system connects the call in a normal way without triggering the value-added service, so that the connection of the call is not affected.

For example, a calling party (such as a user or a terminal) sends a message to a switching device with different names in different networks. In the embodiment of the present invention, a soft switching in the NGN network is used as an example. When the soft switching receives the message, the soft switching processes a subsequent call as a normal call without triggering the service corresponding to abnormal resources. For example, the coloring ring back tone service is not triggered during the call processing so as to guarantee a normal connection of the call and provide a more comprehensive service to the user.

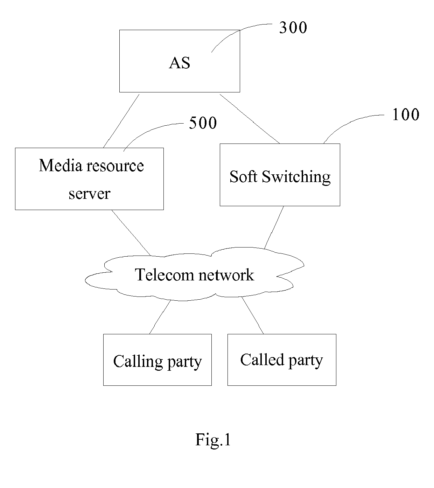

One embodiment of the present invention is implemented with an IP based telecom network. Herein, the NGN network architecture is described as an example and is not constructed as a limit to the present invention. The NGN system networking architecture is shown in Figure 1.

Soft switching 100 is adapted to trigger a service, route or connect a call, and communicate with an AS through a SIP (Session Initiation Protocol) signaling. Soft switching 100 determines a call attribute. If the call is a value-added service, a corresponding value-added service is triggered and the call is forwarded to the AS to perform a subsequent value-added service control.

AS 300 is adapted to load and perform a service logic, and provide rich services for the NGN network. The value-added service is loaded in the AS to control the call triggered by the soft switching according to the service logic.

MRS (Media Resource Server) 500 is a resource component for providing the media value-added service in the IP network. With the control of the soft-switching device, the AS and so on, MRS 500 provides a media data processing service, such as playing announcement, collecting numbers, voice synthesis, voice recognizing, recording, fax and video meeting, to the NGN network.

A method for processing a call according to an embodiment of the present invention is described as follows.

An AS receives a value-added service call triggered by a switching device, and determines whether the value-added service can be provided according to a current resource state. If the value-added service can not be provided according to the current resource state, for example, current resources are insufficient or unavailable for a triggered value-added service, the AS determines whether the call can be deassigned according to a preconfigured service policy and sends a notification for deassigning the call to the switching device when a determining result is to deassign the call. The switching device processes the value-added service call as a normal call not triggering the value-added service after receiving the notification for deassigning the call. Optionally, according to different preconfigured service policies, the AS may send a notification for releasing the call to the switching device, so that deassigning or releasing the call is selected based on the preconfigured service policy. After the switching device receives the notification for releasing the call, the switching device discards the value-added service call. Therefore, this solution may solve problems in the prior art and may improve the user satisfaction by implementing the value-added service for enriching people's life.

The solution in the above embodiment is further described with examples. Wherein, the switching device may be the soft switching, and the call is triggered as follows: the soft switching checks the call attribute of a received call, and triggers the call to the AS if the call is a value-added service call.

Wherein, determining a current resource state mainly includes determining the resource state necessary for processing a current call. The resource state necessary for processing the current call includes, but not limited to, a service state of the AS, a service provision resource state and a service processing resource state. Wherein, the service provision resource state may include a state for indicating whether the media resource server is available, whether the memory is enough, whether the database is normal and whether an external disk array is normal. The service processing resource state may include a state for indicating whether the threads pool is full, whether an idle call instance exists and whether the message queue is full. The case that the value-added service can not be provided according to the current resource state refers to that, the resources necessary for providing the value-added service are insufficient or unavailable. In other words, at least one resource necessary for processing the call is insufficient or unavailable. Therefore, the value-added service may not be provided.

The preconfigured service policy may include at least one of a call deassigning rule, a value-added service priority rule and a value-added service cooperating rule. The value-added service cooperating rule may include a rule for configuring how to cooperate or defining which rule is determined first. The value-added service cooperating rule may relate to a determining order for a plurality of rules. If the service policy of a certain value-added service includes the value-added service priority rule, it is preferable that the AS determines whether to deassign the value-added service call according to the value-added service priority rule. For example, for a certain value-added service, the service policy may be configured in the following way: when the resources necessary for processing the call are insufficient or unavailable, the AS sends a notification message for deassigning the call to the switching device directly.

For example, the preconfigured service policy is described as follows.

| Service feature | Whether to deassign | priority |
|---|---|---|
| coloring ring back tone | Yes | 2 |
| pre-paid function | No | 1 |
| Missing call notifying | Yes | 3 |

In this example, the service triggered by the a call has three value-added service features, including the coloring ring back tone, the pre-paid function and the missing call notifying. According to the service processing policy, a deassigning attribute of the call depends on the value-added service priority characteristic when more than one value-added service feature exists. Because the value-added service feature with the highest priority is the pre-paid function and the attribute *whether to deassign* of the pre-paid function is *No,* the call has to be released other than be deassigned when the application resources for providing the value-added service are insufficient or unavailable. However, if only one value-added service feature of the coloring ring back tone is included, the call may be deassigned according to the service policy when the application resources for providing the value-added service are insufficient or unavailable, because the attribute *whether to deassign* of the coloring ring back tone is *Yes.*

The AS may send a message carrying an identifier to instruct to deassign or release the call to the switching device, so that the notification for instructing to deassign or release the call is sent to the switching device. The identifier may be a message identifier or a reason value specified in the message header.

After receiving the notification message, the switching device may deassign or release the call according to the request in the notification message.

For this service processing, when the application resources for the service processing are insufficient or unavailable, the call may be processed normally. As for the user, a basic communication requirement is satisfied.

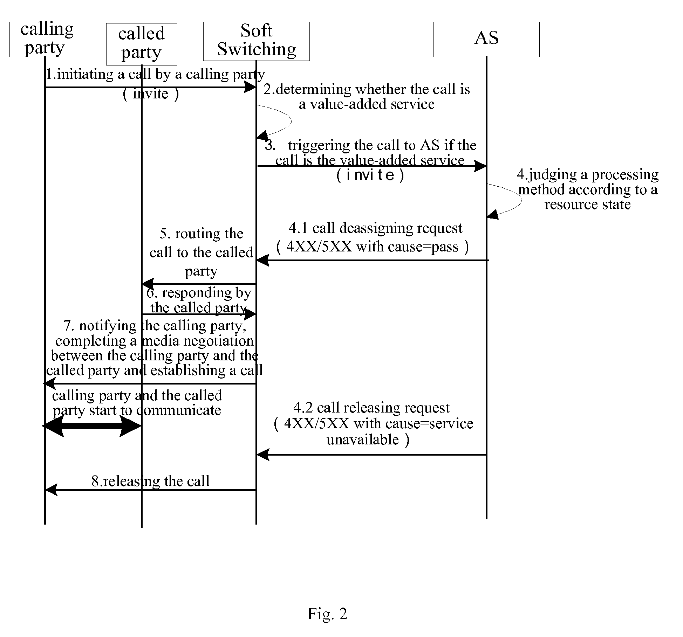

Another embodiment of the call processing is described with reference to Figure 2 as below.

1. A calling party (such as a user or a terminal) initiates a call to a soft switching.

2. The soft switching checks the call attribute, and determines whether the call is a value-added service call.

3. If the call is the value-added service call, the soft switching triggers the call to an AS.

4. The AS determines a service deassigning policy and the resource state necessary for implementing the value-added service. When the AS finds that current resources are insufficient or unavailable for the value-added service, the AS sends a notification for deassigning or releasing the call to the soft switching. The resources necessary for implementing the value-added service include the resources indispensable to process the call. If one of the resources is unavailable or insufficient to provide the value-added service, the value-added service can not be provided. A criterion for determining whether the resources are unavailable or insufficient may be configured based on the network configuration or the user requirement. The criterion may be a threshold. For example, when the resource use rate is higher than a level, the resource state is determined as Unavailable; and when the resource use rate is higher than another level, the resource state is determined as Insufficient. Alternatively, whether the resources are unavailable or insufficient may also be determined according to the resources occupied by different services.

4.1 If the AS determines to deassign the call, the AS sends a call deassigning request carrying an identifier for instructing to deassign the call to the soft switching. The identifier may be a message ID or a reason value specified in the message. The message ID may be a message name to indicate which message is sent. For example, when a response message is sent, the message ID may be used to indicate that the message is a response message. The reason value carried in the message may be a reason value, carried in the reason header field of a SIP 4XX/5XX message, for instructing to release the call. Then, the flow chart proceeds to process 5.

4.2 If the AS determines to release the call, the AS sends a call releasing request carrying an identifier for instructing to release the call to the soft switching. The identifier may be a message ID or a reason value specified in the message head. For example, the reason value for indicating that the service is unavailable and instructing to release the call may be carried in the reason head field of the SIP 4XX/5XX message. Then, the flow chart proceeds to process 8.

5. The soft switching processes the value-added service call as a call not triggering the value-added service after receiving the request carrying the identifier for instructing to deassign the call, and then route the call to the called party. The subsequent processing for the call is implemented by the soft switching.

6. The called party responds.

7. The soft switching notifies the calling party after the called party responds. Therefore, the media negotiation between the calling party and the called party is implemented and the connection is established, and the calling party and the called party may start to communicate.

8. The soft switching releases the value-added service call after receiving the call releasing request carrying the identifier for instructing to release the call.

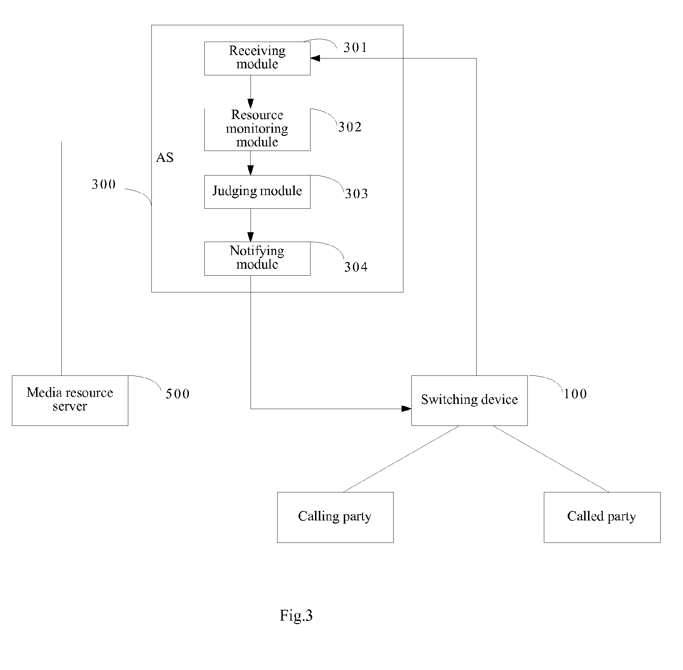

A system for processing a call according to an embodiment of the present invention is describes as follows with reference to Figure 3.

A system for processing a call, including: switching device 100 and AS 300. In an NGN network, the switching device may be a soft switching. Wherein, AS 300 is adapted to receive a value-added service call triggered by switching device 100 and determine whether the call can be deassigned according to a preconfigured service policy when AS 300 finds the value-added service can not be provided according to a current resource state. AS 300 sends a notification for deassgning the call to switching device 100 when determining to deassign the call or sends a notification for releasing the call to switching device 100 when determining that the call can not be deassigned.

Switching device 100 is adapted to check the call attribute of the call initiated by a user, trigger the call to AS 300 when determining that the call is the value-added service call, and process the value-added service call as a normal call not triggering the value-added service when receiving the request message for deassigning the call from AS 300.

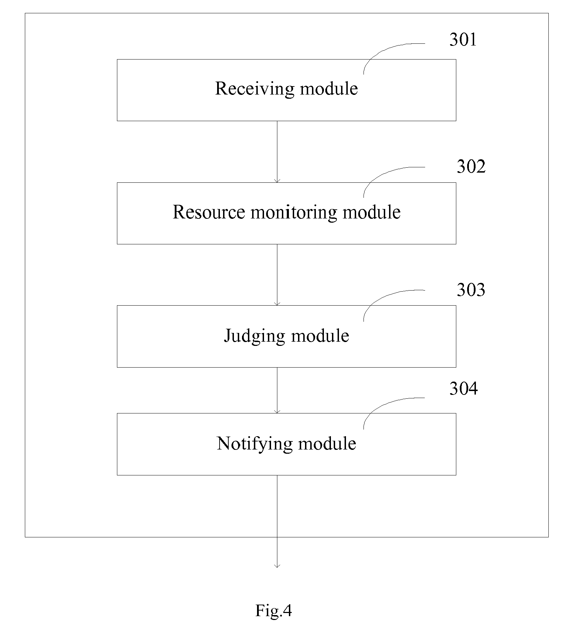

As shown in Figure 4, AS 300 particularly includes receiving module 301, resource monitoring module 302, judging module 303 and notifying module 304.

Receiving module 301 is adapted to receive the value-added service call triggered by the switching device.

Resource monitoring module 302 is adapted to monitor and record a resource state and determine whether the value-added service can be provided according to a current resource state and the call received by receiving module 301.

Judging module 303 is adapted to invoke a preconfigured service policy to determine whether to send a notification for deassigning the call to the switching device, when resource monitoring module 302 determines that the value-added service can not be provided according to the current resource state.

Notifying module 304 is adapted to send a notification message to switching device 100 according to a judging result of judging module 303. For example, when judging module 303 determines that the call can be deassigned, notifying module 304 sends a notification message for deassgning the call to switching device 100; or, when judging module 303 determines that the call can not be deassigned, notifying module 304 sends a notification message for releasing the call to switching device 100.

Switching device 100 process the call as a basic call (i.e., a normal call not including the value-added service) when receiving the notification message for deassigning the call from AS 300. Therefore, the call is connected normally and the call record is generated.

An AS according to another embodiment of the present invention is describes as follows.

An application server, including:

a receiving module, adapted to receive a value-added service call triggered by a switching device;

a resource monitoring module, adapted to monitor and record a resource state and determine whether the value-added service can be provided according to the current resource state and the call received by the receiving module; if the value-added service can not be provided, notify the judging module that the value-added service can not be provided according to the current resource state;

a judging module, adapted to invoke a preconfigured service policy to determine whether the call can be deassigned, when the resource monitoring module determines that the value-added service can not be provided according to the current resource state; and

a notifying module, adapted to send a notification message to the switching device according to a judging result of the judging module. For example, when the judging module determines that the call can be deassigned, the notifying module sends a notification message for deassgning the call to the switching device; or, when the judging module determines that the call can not be deassigned, the notifying module sends a notification message for releasing the call to the switching device.

With reference to Figure 4, the AS according to another embodiment of the present invention is described as follows.

Receiving module 301 is adapted to receive a value-added service call triggered by a soft switching.

Resource monitoring module 302 is adapted to monitor call resources and record different call resource states affecting the provision of the value-added service, e.g. the resources are unavailable or insufficient; the service state is abnormal; the threads pool is full; no idle call instance exists; the media resource server is unavailable; the memory is not enough, the message queue is full, etc. Resource monitoring module 302 is also adapted to determine whether the value-added service can be provided according to the current resource state. If not, resource monitoring module 302 notifies a judging module that the value-added service may not be provided according to the current resource state. The resources refer to the resources indispensable to process the call, such as memory and database. If one of the resources is unavailable, the call can not be processed.

Judging module 303 is adapted to invoke a preconfigured service policy according to the value-added service call received by receiving module 301 and the resource state reported by resource monitoring module 302, so as to determine whether to send a notification message for deassigning the call or a notification message for discarding the call to the soft switching. The preconfigured service policy may be different service policies configured according to different value-added service features. For example, when the resources are insufficient or unavailable for a value-added service or a service feature and a basic call information can not be obtained, the call has to be released; however, when the resources are insufficient or unavailable for a value-added service or a service feature, the basic call information is not affected and the basic call may be performed, as a result, the call may be deassigned. Such service policy may be preconfigured in the AS.

Notifying module 304 is adapted to send a notification message to the soft switching according to the judging result of judging module 303.

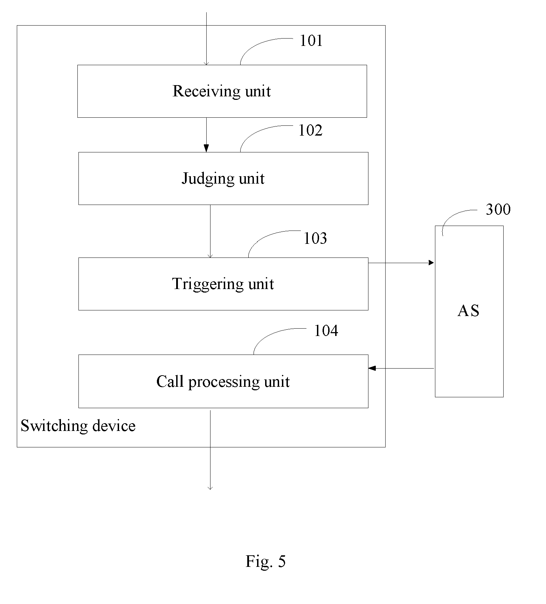

The switching device according to another embodiment of the present invention is shown in Figure 5. Switching device 100 includes receiving unit 101, judging unit 102, triggering unit 103 and call processing unit 104.

Receiving unit 101 is adapted to receive a service call.

Judging unit 102 is adapted to determine whether the service call received by receiving unit 101 is a value-added service call.

Triggering unit 103 is adapted to trigger the determined value-added service to AS 300.

Call processing unit 104 is adapted to process the value-added service call as a call not triggering the value-added service, according to the notification for deassigning the call sent from AS 300.

As described above, according to embodiments of the present invention, the AS may process calls according to the service policy when the resources in the AS are abnormal. Different processing may be performed to different value-added service calls according to the requirement of the value-added service. The call may be connected normally after the value-added service feature not affecting a normal connection is removed. Therefore, the communication requirement of the user is guaranteed and the call success rate of the call is improved. By deassigning the call, the continuous calls of the user may be avoided and the load of the communication system may be reduced. Therefore, it is advantageous for a rapid recovery of the communication system.

The above are only preferred embodiments of the present invention and are not for use in limiting the present invention. Any modification, equivalent replacement or improvement made under the spirit and principles of the present invention is included in the protection scope of the present invention.

## Claims

1. A method for processing a call, comprising:
receiving, by an application server, a value-added service call triggered by a switching device;
determining whether the call can be deassigned according to a preconfigured service policy when the application server finds that the value-added service can not be provided according to a current resource state;
when a determining result is the call can not be deassigned,
instructing the switching device to process the value-added service call as a call not triggering the value-added service.

2. The method of claim 1, wherein, determining, by the application server, that the value-added service can not be provided according to the resources state of the application server, when the application server finds that the value-added service can not be provided according to at least one of a value-added service state, a static provision resource state for the service and a dynamic running resource state for the service.

3. The method of claim 1 or 2, wherein,
the service policy comprises at least one of:
a call deassigning rule and
a value-added service priority rule.

4. The method of claim 3, wherein, the service policy further comprises a value-added service cooperating principle.

5. The method of claim 4, wherein,
when the service policy comprises the value-added service priority rule, determining, by the application server, whether the call can be deassigned according to the value-added service priority rule first.

6. The method of claim 1 or 2, comprises, sending the notification for deassigning the call to the switching device to instruct the switching device to process the value-added service call as the call not triggering the value-added service.

7. The method of claim 6, wherein, the identifier for instructing to deassign the call is a message ID or a reason value specified in the message.

8. A system for processing a call, comprising:
an application server, adapted to receive a value-added service call triggered by a switching device, determine whether the call can be deassigned according to a preconfigured service policy when the application server finds that the value-added service can not be provided according to a current resource state, and send a notification for deassgning the call to the switching device when the application server determines that the call can be deassigned; and
the switching device, adapted to process the value-added service call as a call not triggering the value-added service after receiving the notification for deassgning the call from the application server.

9. The system of claim 8, wherein, the application server comprises:
a receiving module, adapted to receive the value-added service call triggered by the switching device;
a resource monitoring module, adapted to monitor and record a resources state and determine whether the value-added service can be provided according to the current resource state and the call received by the receiving module;
a judging module, adapted to invoke the preconfigured service policy to determine whether the call can be deassigned, when the resource monitoring module determines that the value-added service can not be provided according to the current resource state; and
a notifying module, adapted to send a notification for deassigning the call to the switching device when the judging module determines that the call can be deassigned.

10. The system according to claim 8 and 9, wherein, the application server sends the notification for deassigning the call to the switching device by sending a notification message carrying an identifier for instructing to deassign the call to the switching device.

11. An application server, comprising:
a receiving module, adapted to receive a value-added service call triggered by a switching device;
a resource monitoring module, adapted to monitor and record a resources state and determine whether the value-added service can be provided according to a current resource state and the call received by the receiving module;
a judging module, adapted to invoke a preconfigured service policy to determine whether the call can be deassigned when the resource monitoring module determines that the value-added service can not be provided according to the current resource state; and
a notifying module, adapted to send a notification for deassigning the call to the switching device when the judging module determines that the call can be deassigned.

12. A switching device, comprising,
a receiving unit, adapted to receive a service call;
a determining unit, adapted to determine whether the service call received by the receiving unit is a value-added service call;
a triggering unit, adapted to trigger the value-added service call determined by the determining unit to an application server; and
a call processing unit, adapted to process the value-added service call as a call not triggering the value-added service.
